(19) **Europäisches Patentamt**

**European Patent Office**

**Office européen des brevets**

(11) **EP 1 669 729 A1**

(12) **EUROPEAN PATENT APPLICATION**

(43) Date of publication:
**14.06.2006 Bulletin 2006/24**

(51) Int Cl.:
***G01J 9/04*** *(2006.01)*    ***G01R 23/14*** *(2006.01)*

(21) Application number: **04029252.6**

(22) Date of filing: **09.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Agilent Technologies, Inc. (a Delaware corporation)**
**Palo Alto,**
**California 94306-2024 (US)**

(72) Inventors:
• **McAlexander, William I.**
**Redwood City**
**CA 94061 (US)**

• **Gurunathan, Mohan**
**Mountain View**
**CA 94040 (US)**
• **Pering, Richard D.**
**Mountain View**
**CA 94040 (US)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(54) **A phase-diverse coherent optical spectrum analyzer**

(57)    A phase-diverse coherent optical spectrum analyzer is presented. An optical receiver receives a first input signal and a second input signal, and produces at least a first output signal, a second output signal, and a third output signal based on mixing the first input signal and the second input signal. A processing unit isolates heterodyne components from the first output signal, the second output signal and the third output signal, wherein the heterodyne components comprise a first signal and a second signal that represent the phase-diverse nature of the optical mixing process. Phase diversity of the heterodyning between the first input signal and the second input signal is achieved by the coherent optical spectrum analyzer.

## Figure 1A

100

EP 1 669 729 A1

# Figure 1B

**Description**

FIELD OF INVENTION

Various embodiments in accordance with the invention relate to the field of optical spectral analysis.

BACKGROUND OF THE INVENTION

High-resolution optical spectrometers (also known as coherent optical spectral analyzers) are used to observe spectral features of an unknown signal. Some high-resolution optical spectrometers implement a heterodyne architecture, based upon principles of coherent optical spectral analysis, to achieve very fine measurement resolution. In accordance with this heterodyne architecture, current high-resolution spectrometers utilize a 2x2 optical coupler to combine the unknown signal with a local oscillator signal generated by a local oscillator that is intentionally set to oscillate at a known frequency or to sweep across a range of frequencies. The two outputs of the coupler are detected through a nonlinear detector, such as a photodiode, and the resulting electrical signals subtracted from one another to produce the desired heterodyne signal. From this, the spectral features of the unknown signal can be obtained.

One of the principle uses of a high-resolution optical spectrometer is to map out the spectral amplitude of the unknown signal as a function of wavelength. To perform such a measurement, the local oscillator signal is swept across different wavelengths, while the heterodyne signal due to mixing with the unknown signal is acquired. Unfortunately, the current receiver architecture, which is based on a 2x2 optical coupler, is unable to measure the precise phase of the heterodyne signal. Since the phase of the heterodyne signal varies throughout the scan, as well as from scan to scan, amplitude uncertainty is introduced into the spectral measurement. This amplitude uncertainty is especially evident when intermediate frequency (IF) receivers with lowpass filters are employed. Furthermore, the inability to observe the phase of the heterodyne signal also results in the receiver being equally sensitive to both positive and negative heterodyne beat frequencies. Therefore, any attempt to reduce phase uncertainty by using a bandpass receiver will result in the formation of spectral images that limit the ultimate resolution of the device.

The problem with measuring the phase of the heterodyne signal stems from the basic phase ambiguity of a sinusoidal function. Typically, the heterodyne signal as described above will have the general form:

$$H(t) = V(t) \cos (2\pi\Delta ft + \phi(t)) \tag{1}$$

as shown in Equation 1, where $\Delta f$ represents a frequency difference between the local oscillator and unknown signals, and $\phi(t)$ represents the relative phase of the heterodyne beat signal. A single measurement of H(t) is unable to resolve V(t), the desired heterodyne amplitude, since there are two unknowns (V(t) and $\phi(t)$). Even if V(t) is known or assumed constant in time it is impossible to compute with certainty the phase argument $(2\pi\Delta ft + \phi(t))$, simply because the arccosine function is not single-valued. Therefore, from a measurement of H(t), it is not possible to know with certainty the relative phase $\phi(t)$, nor whether the frequency difference $\Delta f$ is positive or negative. Furthermore, variations in the amplitude of the heterodyne signal V(t) make determination of the phase argument even more problematic. Ultimately, two independent and simultaneous measurements of H(t) are needed to obtain the two unknowns V(t) and $\phi(t)$.

The problem is solved if the heterodyne signal H(t) can be represented as a vector, rather than scalar, quantity. If H(t) is of the form:

$$H(t) = V(t)e^{i(2\pi\Delta ft + \phi(t))} \tag{2}$$

as shown in Equation 2, then the phase argument $(2\pi\Delta ft + \phi(t))$ can be computed, without ambiguity, as shown in Equation 3:

$$\angle H(t) = \arctan\left(\frac{\text{Im}\{H(t)\}}{\text{Re}\{H(t)\}}\right) \tag{3}$$

The measurement of the Real and Imaginary components of H(t) constitute the needed dual simultaneous measurement of H(t). The unambiguous nature of this phase computation can easily be understood by drawing H(t) as a vector in the complex plane. There are three main benefits to the vector representation of H(t), over the scalar. Firstly, it becomes completely clear whether the heterodyne frequency $\Delta f$ is positive or negative. Secondly, the relative phase $\phi(t)$ can be determined without ambiguity. Finally, the phase measurement is now completely decoupled from variations in the heterodyne amplitude V(t) - and conversely, measurements of V(t) are insensitive to variations in the phase angle of the heterodyne signal. Herein, any system that generates or operates on a vector heterodyne signal, which in turn may be resolved into an orthogonal basis, will be known as a "phase-diverse" system. With regard to coherent optical spectral analysis, the use of phase-diverse techniques translates directly to spectral image elimination and improved amplitude accuracy.

The issue of phase-diversity has been addressed in the field of coherent optical communications. The use of phase-diverse receivers in coherent communication systems has enabled a number of advances, such as eliminating crosstalk effects from adjacent data channels. However, while phase-diverse receiver techniques have found some application in coherent communications, little has been carried over to the realm of optical spectral analysis. Since optical spectral analysis is focused on measurements in the frequency-domain, rather than time-domain, the receiver requirements are often very different from those in time-domain communications applications.

SUMMARY OF THE INVENTION

Various embodiments in accordance with the invention, a phase-diverse coherent optical spectrum analyzer, are described herein. In one embodiment in accordance with the invention, the optical phase-diverse coherent optical spectrum analyzer isolates the In-phase and Quadrature (e.g., Real and Imaginary) heterodyne components of the output signals, such that the phase-diverse coherent optical spectrum analyzer achieves phase diversity of the heterodyne signal. In another embodiment in accordance with the invention, a method for spectral analysis of an optical signal is provided. Two optical input signals are received, and at least three phase-diverse output signals are produced based on mixing of the input signals. From these phase-diverse heterodyne output signals the quadrature components of the output signals are isolated, wherein the quadrature components comprise two signals with a 90-degree relationship. In this way the phase-diverse coherent optical spectrum analyzer achieves phase diversity of the heterodyne mixing between the input signals.

BRIEF DESCRIPTION OF THE DRAWINGS

The accompanying drawings, which are incorporated in and form a part of this specification, illustrate embodiments in accordance with the invention and, together with the description, serve to explain the principles of the invention:

FIG. 1A is a diagram illustrating a phase-diverse coherent optical spectrum analyzer of an embodiment in accordance with the invention.

FIG. 1 B is a diagram illustrating a receiver unit of an embodiment in accordance with the invention.

FIG. 2 is a diagram illustrating an optical receiver comprising a 3x3 optical coupler of an embodiment in accordance with the invention.

FIG. 3 is a diagram illustrating a processing unit and a transformation unit of an embodiment in accordance with the invention.

FIG. 4A is a graph illustrating the relative phase of heterodyne terms of an embodiment in accordance with the invention.

FIG. 4B is a graph illustrating the relative phase of the quadrature signals of an embodiment in accordance with the invention.

FIG. 5 is a flowchart illustrating a process for analyzing an optical signal of an embodiment in accordance with the invention.

**DETAILED DESCRIPTION OF THE INVENTION**

Reference will now be made in detail to various embodiments in accordance with the invention, examples of which are illustrated in the accompanying drawings. While the invention will be described in conjunction with various embodiments in accordance with the invention, it will be understood that they are not intended to limit the invention to these embodiments in accordance with the invention. On the contrary, the invention is intended to cover alternatives, modifications and equivalents, which may be included within the spirit and the scope of the invention as defined by the appended claims. Furthermore, in the following detailed description of the invention, numerous specific details are set forth in order to provide a thorough understanding of various embodiments in accordance with the invention. However, it will be apparent to one skilled in the art that embodiments in accordance with the invention may be practiced without these specific details. In other instances, well-known methods, procedures, components, structures and devices have not been described in detail so as to avoid unnecessarily obscuring aspects of embodiments in accordance with the invention.

Various embodiments in accordance with the invention provide a phase-diverse coherent optical spectrum analyzer. By utilizing a 3x3 optical coupler, phase diversity is achieved, such that the accuracy and certainty of an amplitude reading is improved. Furthermore, the phase-diverse coherent optical spectrum analyzer provides for appropriate signal processing such that the positive and negative frequency images can be separated, improving spectral resolution. Following such signal processing, the phase-diverse coherent optical spectrum analyzer may include a measurement unit whose purpose is to calculate and display spectral amplitude, chirp, or other measurements as a function of wavelength. The use of phase diversity improves amplitude accuracy and resolution in the coherent optical spectrum analyzer, and may enable additional measurements such as chirp or frequency modulation.

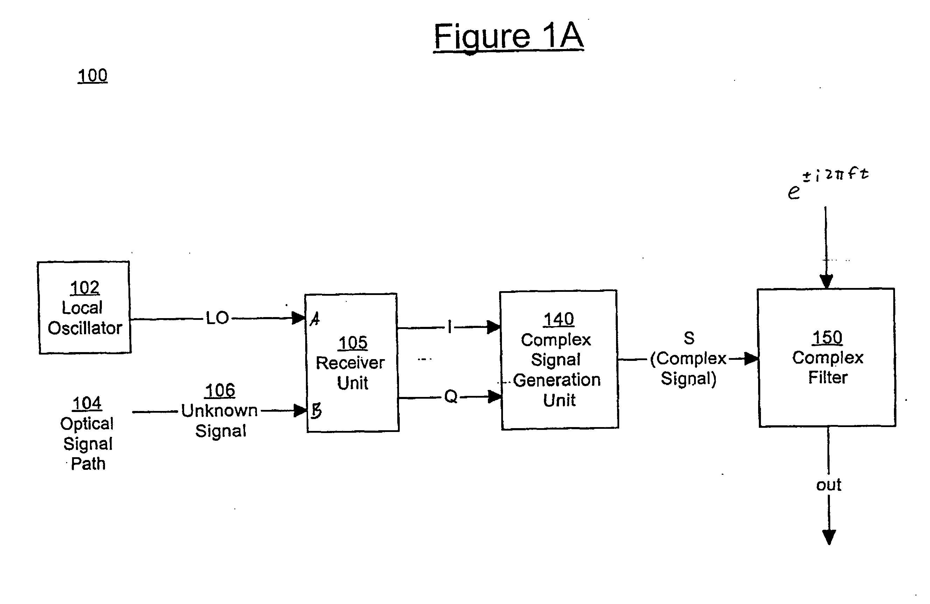

FIG. 1A is a diagram illustrating a phase-diverse coherent optical spectrum analyzer 100 of an embodiment in accordance with the invention. Phase-diverse coherent optical spectrum analyzer 100 comprises local oscillator 102 for producing a local oscillator signal (LO) and providing the LO to an input A of receiver unit 105. In one embodiment in accordance with the invention, local oscillator 102 is a laser source, such as a tunable external cavity laser diode. In one embodiment, the LO is continuously swept. Optical signal path 104 is coupled to input B of receiver unit 105 for providing an input signal to input B. In one embodiment in accordance with the invention, the input signal is unknown signal 106. In one embodiment in accordance with the invention, unknown signal 106 is output from an optical network. In one embodiment, the components of phase-diverse coherent optical spectrum analyzer 100 are fiber based.

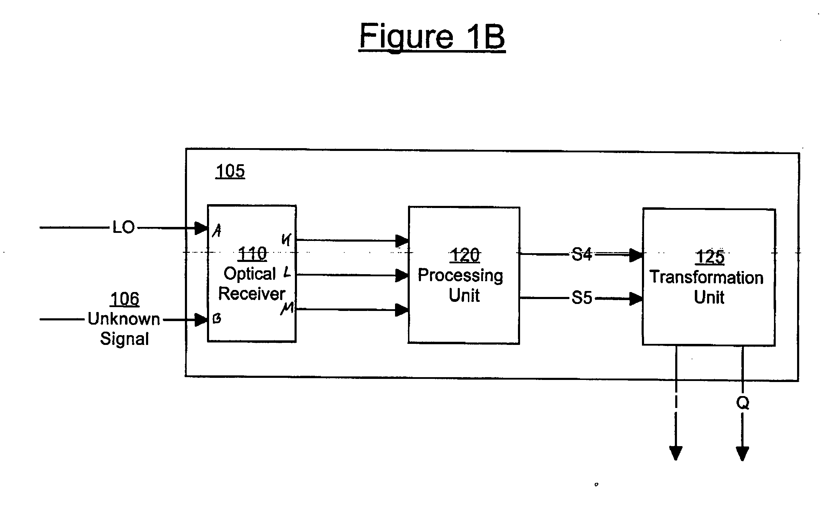

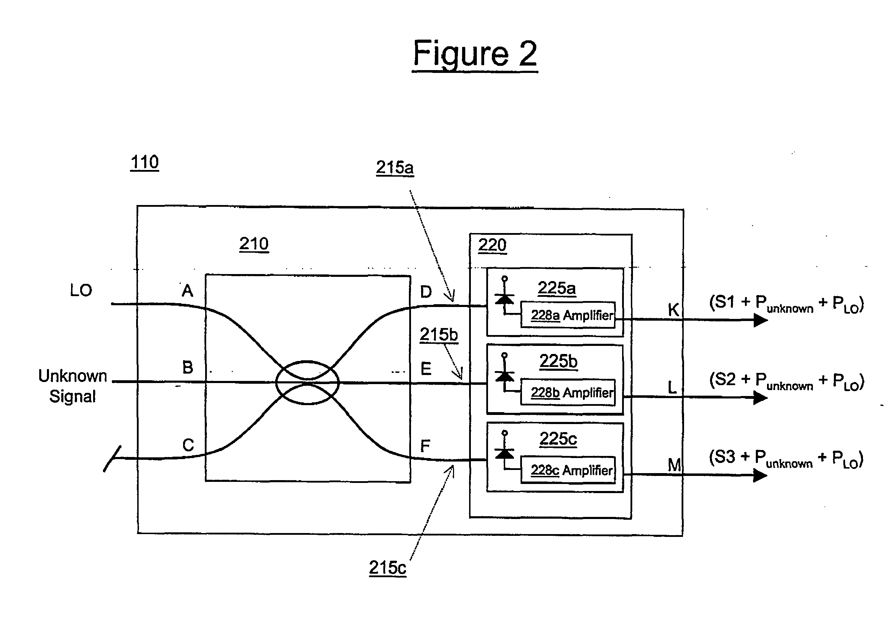

With reference to FIG. 1 B, receiver unit 105 is illustrated of an embodiment in accordance with the invention. Receiver unit 105 comprises optical receiver 110, processing unit 120, and transformation unit 125. Optical receiver 110 comprises two inputs A and B and at least three outputs K, L and M. In one embodiment in accordance with the invention, optical receiver 110 comprises a 3x3 optical coupler (e.g., optical coupler 210 of FIG. 2) for producing three output signals. Output signals K, L, and M are produced based on LO and unknown signal 106. It should be appreciated that embodiments in accordance with the invention may be implemented using an optical coupler other than a 3x3 optical coupler. In one embodiment in accordance with the invention, a 4x4 optical coupler is used. In another embodiment in accordance with the invention, a series of 2x2 optical couplers is used to produce at least three output signals. For purposes of the application, embodiments in accordance with the invention are described comprising a 3x3 optical coupler. However, it should be appreciated that those skilled in the art would understand how to implement the invention using different optical couplers (e.g., a 4x4 optical coupler).

FIG. 2 is a diagram illustrating an optical receiver 110 of an embodiment in accordance with the invention. Optical receiver 110 comprises 3x3 optical coupler 210 and detecting unit 220. 3x3 optical coupler 210 comprises two optical inputs A and B and three optical outputs D, E and F. For illustrative purpose, input C is shown as unconnected and not receiving any signal. It should be appreciated that there are only two optical inputs, and that input C is not necessary. In one embodiment in accordance with the invention, 3x3 optical coupler 210 receives a local oscillator signal LO at input A and an optical input signal from the signal path 104 at input B. In one embodiment in accordance with the invention, the optical input signal is unknown signal 106. In one embodiment, 3X3 optical coupler 210 is a fiber-optic coupler.

In one embodiment in accordance with the invention, 3x3 optical coupler 210 is a balanced optical coupler that has a splitting ratio of one-third to each output. 3x3 optical coupler 210 combines the optical signals received at inputs A and B, and outputs summed optical signals via optical outputs D, E and F. More particularly, a portion of each of LO and unknown signal 106 presented to the inputs A and B, respectively, of optical receiver 110 will be distributed to each of the optical outputs D, E and F. The portion of the signal distributed will be dependent upon the splitting ratio of the 3x3 optical coupler 210. In one embodiment in accordance with the invention, optical coupler 210 provides an equal one-third of the combined unknown signal 106 and LO to optical outputs D, E and F. However, it should be appreciated that 3x3 optical coupler 210 may have a different split ratios such as, for example, but not limited to, a 25/25/50 split ratio.

Detector unit 220 comprises detector 225a and amplifier 228a that are coupled to optical output D of 3x3 optical coupler 210 via optical lead 215a, detector 225b and amplifier 228b that are coupled to optical output E of 3x3 optical coupler 210 via optical lead 215b, and detector 225c and amplifier 228c that are coupled to optical output F of 3x3 optical coupler 210 via optical lead 215c. Detector 225a produces a signal proportional to the sum of the power in the LO ($P_{LO}$), the power in the unknown signal 106 ($P_{unknown}$), and an electrical mixing (or heterodyne beat) signal S1 in response to an optical signal at output D. Detector 225b produces a similar signal with electrical mixing signal S2 in response to an optical signal at output E, and detector 225c produces a similar signal with electrical mixing signal S3 in response to an optical signal at output F. More particularly, detectors 225a-c respond to the intensity of an optical signal at outputs D, E and F, respectively. In one embodiment in accordance with the invention, detectors 225a-c are photodiodes, which exhibit a square-law detection response; however it should be appreciated that any nonlinear detection device may be used. Photodiodes allow the LO signal and unknown signal to mix producing a heterodyne beat (e.g., S1, S2 and S3).

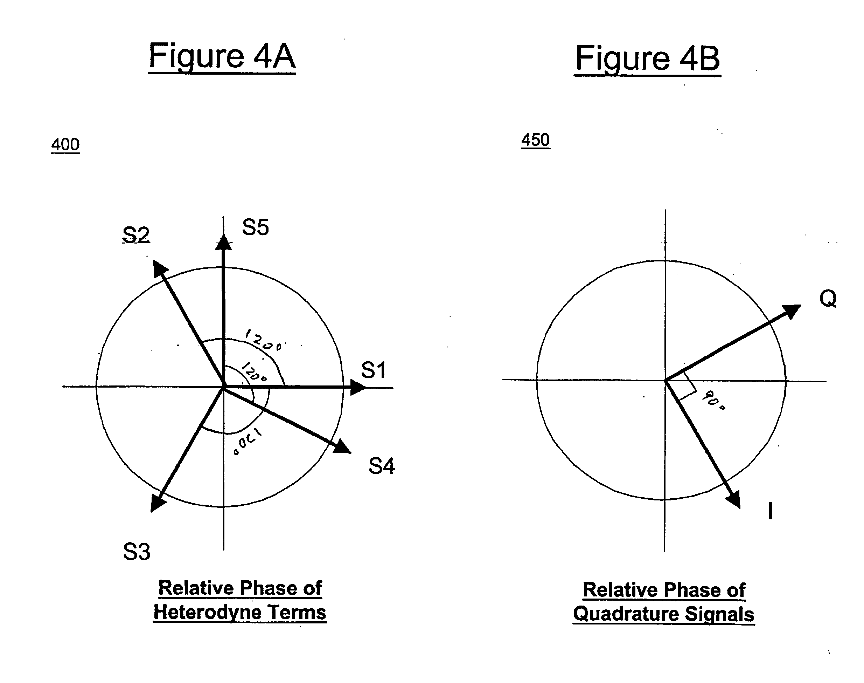

With reference to FIG. 2, it should be appreciated that electrical mixing signals S1, S2 and S3 produced by the detectors 225a-c in response to the summed optical signals output by 3x3 optical coupler 210 have the same intensity characteristics, but differ in phase by 120 degrees. FIG. 4A is a graph 400 illustrating the relative phase angles of the heterodyne beat frequencies of an embodiment in accordance with the invention. As shown in graph 400, S1, S2 and S3, the heterodyne terms produced upon mixing at detectors 225a-c, differ in phase by 120 degrees.

With reference again to FIG. 1 B, phase-diverse coherent optical spectrum analyzer 100 also comprises processing unit 120 for discarding the noise portions (e.g., $R_{unkown}$ and $P_{LO}$) and outputting output signals S4 and S5. Processing unit 120 can also compensate for any imbalances or noise in the response/transfer characteristics of K, L and M. It should be appreciated that in certain situation, the noise portions are small enough so that processing unit 120 is not required to account for the noise portion, and outputs output signals S4 and S5 as any two of K, L and M. Transformation unit 125 transforms S4 and S5 into two quadrature signals that differ in phase by 90 degrees with respect to each other.

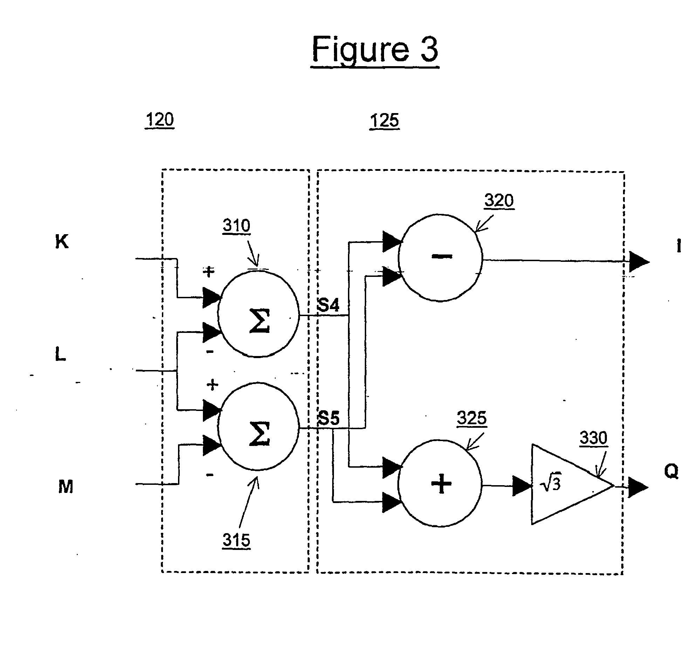

FIG. 3 is a diagram illustrating a processing unit 120 and a transformation unit 125 of an embodiment in accordance with the invention. Processing unit 120 comprises summing circuits 310 and 315. In another embodiment in accordance with the invention, noise subtraction is performed on K, L and M, where L is used as a common-mode channel. It should be appreciated that any of signals K, L and M can be used as a common-mode channel. The photocurrents detected at detectors 225a-c comprise power contributions from light intensity passing through optical receiver 110 as well as contributions from the mixing, or interference, of unknown signal 106 (unknown signal light) with LO (LO light).

It should be appreciated that in one embodiment, where the noise portions (e.g., $P_{unknown}$ and $P_{LO}$) are small, processing unit 120 is not required to perform noise subtraction. In the present embodiment, K=S1, L=S2, and M=S3. Only two of the three outputs are essential for continued signal processing.

At summing circuit 310, L is subtracted from K, isolating the mixing term S4 = S1 - S2, according to Equation 4:

$$ K - L = S4 \propto \sqrt{P_{LO}P_{unknown}} \; \cos(2\pi\Delta f \, t + \phi) \qquad (4) $$

wherein $P_{LO}$ represents the power in the LO, $P_{unknown}$ represents the power in the unknown signal 106, $\Delta f$ represents the difference in frequencies between local oscillator frequency LO and unknown signal 106, t represents the time, and $\phi$ represents the relative phase between the LO and unknown frequencies.

Similarly, at summing circuit 315, M is subtracted from L, isolating the mixing term S5 = S2 - S3, according to Equation 5:

$$ L - M = S5 \propto \sqrt{P_{LO}P_{unknown}} \; \cos(2\pi \, \Delta f \, t + \phi + 120^{\circ}) \qquad (5) $$

wherein $P_{LO}$ represents the power in the LO, $P_{unknown}$ represents the power in the unknown signal 106, $\Delta f$ represents the difference in frequencies between local oscillator frequency LO and unknown signal 106, t represents the time, and $\phi$ represents the phase.

Signals S4 and S5 are electrical signals from which the amplitude and phase of the heterodyne signal can be determined. As can be seen at Equations 4 and 5, S4 and S5 differ by 120 degrees and are phase-diverse. In order to obtain accurate calculations for amplitude and phase, it is convenient to transform S4 and S5 into quadrature signals differing by 90 degrees (e.g., resolved on an orthogonal basis). In one embodiment, where noise subtraction is unnecessary due to the noise portions being small, S4 = K and S5 = L. It should be appreciated that S4 and S5 may be any combination of K, L and M.

In one embodiment in accordance with the invention, processing unit 120 is implemented as electronic circuitry coupled to optical receiver 110. In another embodiment in accordance with the invention, processing unit 120 is implemented as computer code resident within a computer readable medium for receiving inputs representing signals K, L and M and isolating the heterodyne signal by producing signals S4 and S5. It should be appreciated that processing unit 120 can be tailored to account for a non-ideal coupler and/or photodetectors. For example, if the loss of the 3x3 coupler is different in each path, processing unit 120 may include gain elements to balance the subtraction. Also, for example, if the photodetectors in detector unit 220 have different frequency responses, processing unit 120 may include filters to equalize the response of the channels before the subtraction is performed.

S4 and S5 are received at transformation unit 125 of FIG. 3. Transformation unit 125 operates on the assumption that signals S1, S2 and S3 are derived from an ideal 3x3 coupler which has a 120 degree phase relation between the various outputs. This is a consequence of energy conservation within the coupler. It should be appreciated that transformation unit 125 can be tailored to account for a non-ideal coupler. For example, if the phase relation of the 3x3 coupler is not exactly 120 degrees, the root 3 can be altered slightly to account for the difference.

Transformation unit 125 operates to transform signals S4 and S5, which differ by 120 degrees, into two quadrature signals I and Q differing in phase by 90 degrees. Specifically, transformation circuit 125 receives signals S4 and S5. Quadrature signal I is determined by subtracting S5 from S4 at subtractor 320, as shown at Equation 6:

$$I = S4 - S5 \qquad (6)$$

Substituting the terms for S4 and S5 from Equations 4 and 5, respectively, quadrature signal I is determined according to Equation 7:

$$I = S1 - 2S2 + S3 \qquad (7)$$

Quadrature signal Q is determined by adding S4 and S5 at adder 325, and multiplying this sum by $\sqrt{3}$ at multiplier 330, as shown at Equation 8:

$$Q = \sqrt{3} \ (S4 + S5) \qquad (8)$$

Substituting the terms for S4 and S5 from Equations 4 and 5, respectively, quadrature signal Q is determined according to Equation 9:

$$Q = \sqrt{3} \ (S1 - S3) \qquad (9)$$

In one embodiment in accordance with the invention, transformation unit 125 is implemented as electronic circuitry coupled to processing unit 120. In another embodiment in accordance with the invention, transformation unit is implemented as computer code resident within a computer readable medium for transforming inputs representing signals S4 and S5 into quadrature values.

It should be appreciated that transformation unit 125 may not be required in particular embodiments in accordance with the invention. For example, where a 4x4 optical coupler is used rather than a 3x3 optical coupler, the heterodyne terms vary from each other by multiples of 90 degrees. As such, the functionality of transformation unit 125 is performed at processing unit 120.

FIG. 4B is a graph 450 illustrating the relative phase of the quadrature signals I and Q of an embodiment in accordance with the invention. As shown in graph 450, 1 and Q, the quadrature signals produced from phase-diverse coherent optical spectrum analyzer 100, differ in phase by 90 degrees. Since I and Q are phase-diverse, the amplitude accuracy of phase-diverse coherent optical spectrum analyzer 100 is improved. Furthermore, appropriate signal processing allows for the separation of positive and negative frequency images, thereby improving spectral resolution.

With reference again to FIG. 1A, phase-diverse coherent optical spectrum analyzer 100 further comprises complex signal producion unit 140 for producing a complex signal comprising quadrature signals I and Q. Complex signal S can be defined as comprising quadrature signals I and Q, as shown at Equation 10:

$$S = I + iQ = (\text{Amplitude})e^{i(2\pi ft+\phi)} \propto \sqrt{P_{LO}P_{unknown}}\, e^{i(2\pi ft+\phi)} \qquad (10)$$

Complex signal S, by construction, has a determined amplitude and phase $\phi$. This amplitude is proportional to the unknown signal power ($P_{unknown}$) and allows its accurate measurement independently of the value of the phase $\phi$. This is one of the benefits of using a phase-diverse receiver in the coherent optical spectrum analyzer. Furthermore, complex signal S can be filtered with complex filter 150 to isolate negative and/or positive frequencies as needed. In one embodiment in accordance with the invention, complex filter 150 is constructed according to some appropriately windowed complex impulse response based on $e^{\pm i2\pi ft}$, to isolate negative and/or positive frequencies, wherein f is the desired filter center frequency. In the case that I and Q have been bandpass filtered by receiver unit 105, the negative and positive images which result can be individually isolated with complex filter 150. This improves spectral resolution and may have other advantages such as allowing for chirp or frequency modulation (FM) measurements.

Spectral analysis typically relies on using narrow-band optical receivers for analyzing the spectral properties of a signal. In contrast, coherent communications requires wide-band operation for identifying channels that are needed in coherent communications. Therefore, phase-diverse receivers for use in coherent communications are concerned with the time domain response of a data channel, and are not directly concemed with the spectral domain of a signal. In particular, the wide-band operating requirements of phase-diverse receivers used in coherent communications are generally not applicable to narrow-band operation for use in spectral analysis. The performance requirements for a narrow-band receiver are different from the requirements for a wide-band communication system.

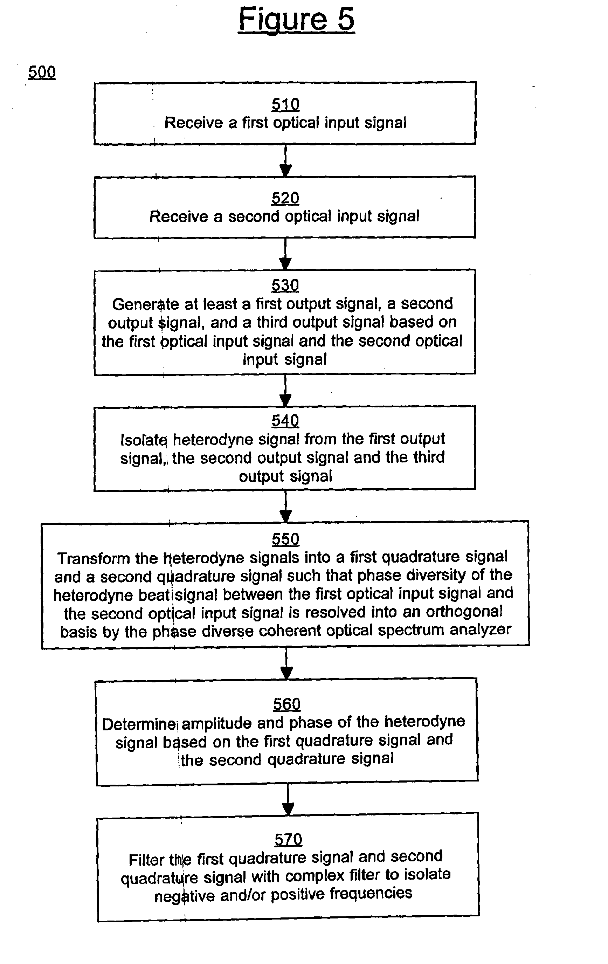

FIG. 5 is a flowchart illustrating a process for analyzing an optical signal of an embodiment in accordance with the invention. In one embodiment in accordance with the invention, process 500 is performed at a phase-diverse coherent optical spectrum analyzer (e.g., phase-diverse coherent optical spectrum analyzer 100 of FIG. 1A). Although specific blocks are disclosed in process 500, such blocks are exemplary. That is, the embodiments in accordance with the invention are well suited to performing various other blocks or variations of the blocks recited in FIG. 5.

At block 510 of process 500, a first optical input signal is received. In one embodiment in accordance with the invention, the first optical input signal is a local oscillator signal LO (e.g., local oscillator signal LO of FIG. 1A). In one embodiment in accordance with the invention, local oscillator signal LO is received from a laser source, such as a tunable external cavity laser diode.

At block 520, a second optical input signal is received. In one embodiment in accordance with the invention, the second optical input signal is an unknown signal (e.g., unknown signal 106 of FIG. 1A). In one embodiment in accordance with the invention, unknown signal 106 is an optical output signal from an optical network.

At block 530, at least a first output signal, a second output signal, and a third output signal are produced based on the first optical input signal and the second optical input signal. It should be appreciated that any number of output signals can be produced depending on the characteristics of the optical coupler. In one embodiment in accordance with the invention, the optical coupler is a 3x3 optical coupler. In another embodiment in accordance with the invention, the optical coupler is a 4x4 optical coupler wherein the output signals differ in phase by multiples of ninety degrees.

At block 540, the heterodyne signals are isolated from the first output signal, the second output signal and the third output signal. In one embodiment in accordance with the invention, the non-heterodyne signals are removed by subtracting the second output signal from the first output signal and subtracting the third output signal from the second output signal. It should be appreciated that the heterodyne signals are phase-diverse. In another embodiment where the output signals have little noise, two of the three outputs may be used to isolate the heterodyne signals. In one embodiment, to easily determine the amplitude and phase, the heterodyne signals may be resolved on an orthogonal basis.

At block 550, the heterodyne signals are transformed into an orthogonal basis by constructing a first quadrature signal and a second quadrature signal. The first quadrature signal and second quadrature signal differ in phase by 90 degrees, such that phase diversity of the original heterodyne beat is resolved into an orthogonal basis by the phase-diverse coherent optical spectrum analyzer. It should be appreciated that step 550 may not be necessary in various embodiments in accordance with the invention. For example, where the optical coupler is a 4x4 optical coupler, the heterodyne signals as determined at block 540 will vary in phase by 90 degrees, providing their orthogonal basis.

At block 560, the amplitude and phase of the heterodyne signal is determined based on the first quadrature signal and the second quadrature signal. It should be appreciated that block 560 is optional.

At block 570, the first quadrature signal and second quadrature signal are filtered with a complex filter to isolate negative and/or positive frequencies as needed (e.g., for bandpass architectures). In one embodiment in accordance with the invention, complex filter 150 filters according to $e^{\pm i2\pi ft}$ to isolate negative and/or positive frequencies.

Various embodiments in accordance with the invention, a phase-diverse coherent optical spectrum analyzer is provided. By implementing a 3x3 optical coupler, phase diversity is achieved, thereby improving the accuracy and certainty of an amplitude reading. Furthermore, the positive and negative frequency images can be separated by appropriate signal processing, improving spectral resolution. Moreover, implementing a 3x3 optical coupler provides greater flexibility in optical receiver design.

Various embodiments in accordance with the invention, a phase-diverse coherent optical spectrum analyzer, are thus described. While the invention has been described in particular embodiments in accordance with the invention, it should be appreciated that the invention should not be construed as limited by such embodiments in accordance with the invention, but rather construed according to the below claims.

**Claims**

1. A phase-diverse coherent optical spectrum analyzer comprising:

   an optical receiver for receiving a first input signal and a second input signal, and producing at least a first output signal, a second output signal, and a third output signal based on mixing said first input signal and said second input signal, wherein said mixing is done by said optical receiver;
   a processing unit for isolating heterodyne components of said first output signal, said second output signal, and said third output signal, said heterodyne components comprising a first signal and a second signal such that phase diversity of the heterodyne components between said first input signal and said second input signal is achieved by said phase-diverse coherent optical spectrum analyzer.

2. A phase-diverse coherent optical spectrum analyzer comprising:

   an optical receiver for receiving a first input signal and a second input signal, and producing at least a first output signal, a second output signal, and a third output signal based on mixing said first input signal and said second input signal, wherein said mixing is done by said optical receiver, and wherein said optical receiver comprises a 4x4 optical coupler;
   a processing unit for isolating heterodyne components of said first output signal, said second output signal, and said third output signal, said heterodyne components comprising a first signal and a second signal such that phase diversity of the heterodyne components between said first input signal and said second input signal is achieved by said phase-diverse coherent optical spectrum analyzer.

3. A phase-diverse coherent optical spectrum analyzer comprising:

   an optical receiver for receiving a first input signal and a second input signal, and producing at least a first output signal, a second output signal, and a third output signal based on mixing said first input signal and said second input signal, wherein said mixing is done by said optical receiver;
   a processing unit for isolating heterodyne components of said first output signal, said second output signal, and said third output signal, said heterodyne components comprising a first signal and a second signal such that phase diversity of the heterodyne components between said first input signal and said second input signal is achieved by said phase-diverse coherent optical spectrum analyzer; and
   a complex filter for filtering said first signal and said second signal to isolate negative and positive frequencies.

4. A phase-diverse coherent optical spectrum analyzer comprising:

   an optical receiver for receiving a first input signal and a second input signal, and producing at least a first output signal, a second output signal, and a third output signal based on mixing said first input signal and said second input signal, wherein said mixing is done by said optical receiver;
   a processing unit for isolating heterodyne components of said first output signal, said second output signal, and said third output signal, said heterodyne components comprising a first signal and a second signal such that phase diversity of the heterodyne components between said first input signal and said second input signal is achieved by said phase-diverse coherent optical spectrum analyzer;

a transformation unit for transforming said heterodyne components into a first quadrature signal and a second quadrature signal such that orthogonality of the phase diverse heterodyne components between said first input signal and said second input signal is achieved by said phase-diverse coherent optical spectrum analyzer; and a complex filter for filtering said first quadrature signal and said second quadrature signal to isolate negative and/or positive frequencies.

5. The phase-diverse coherent optical spectrum analyzer as recited in Claim 1 wherein said optical receiver comprises a 3x3 optical coupler.

6. The phase-diverse coherent optical spectrum analyzer as recited in Claim 1 wherein said optical receiver comprises a 4x4 optical coupler.

7. The phase-diverse coherent optical spectrum analyzer as recited in Claim 1 further comprising a complex filter for filtering said first signal and said second signal to isolate a frequency.

8. The coherent optical spectrum analyzer as recited in Claim 1 further comprising a transformation unit for transforming said heterodyne components into a first quadrature signal and a second quadrature signal such that orthogonality of the phase diverse heterodyne components between said first input signal and said second input signal is achieved by said phase-diverse coherent optical spectrum analyzer.

9. The phase-diverse coherent optical spectrum analyzer as recited in Claim 8 further comprising a complex filter for filtering said first quadrature signal and said second quadrature signal to isolate a frequency.

10. The phase-diverse coherent optical spectrum analyzer as recited in one of claims 1 to 4 wherein said second input signal is an optical local oscillator signal.

11. The phase-diverse coherent optical spectrum analyzer as recited in one of claims 1 to 4 wherein said first input signal is a first optical input signal, said second input signal is a second optical input signal, said first output signal is a first optical output signal, said second output signal is a second optical output signal, and said third output signal is a third optical output signal.

12. The phase-diverse coherent optical spectrum analyzer as recited in Claim 11 wherein said optical receiver further comprises a square law detector unit for converting said first optical output signal to a first electrical output signal, said second optical output signal to a second electrical output signal, and said third optical output to a third electrical output signal.

13. The phase-diverse coherent optical spectrum analyzer as recited in Claim 12 wherein said square law detector unit comprises a first photodiode for converting said first output signal into said first electrical output signal, a second photodiode for converting said second optical output signal into said second electrical output signal, and a third photodiode for converting said third optical output into said third electrical output signal.

14. The phase-diverse coherent optical spectrum analyzer as recited in Claim 4 or 8 further comprising a measurement unit for calculating amplitude and phase of a heterodyne signal comprising said heterodyne components based on said first quadrature signal and said second quadrature signal.

15. The phase-diverse coherent optical spectrum analyzer as recited in Claim 4 or 8 wherein said processing unit is operable to subtract said second output signal from said first output signal to produce a fourth output signal and said third output signal from said second output signal to produce a fifth output signal and to isolate said heterodyne terms.

16. The phase-diverse coherent optical spectrum analyzer as recited in Claim 15 wherein said transformation unit is operable to transform said fourth output signal and said fifth output signal into said first quadrature signal and said second quadrature signal.

17. The phase-diverse coherent optical spectrum analyzer as recited in Claim 10 wherein said optical local oscillator signal is sweeping in frequency.

18. A phase-diverse coherent optical spectrum analyzer comprising:

a first input for receiving a first optical input signal;

a second input for receiving a second optical input signal;

an optical coupler for receiving said first optical input signal and said second optical input signal, and producing at least three optical output signals based on said first optical input signal and said second optical input signal, wherein said optical coupler combines said first optical input signal and said second optical input signal;

a detector unit for converting said optical output signals into corresponding electrical output signals allowing for mixing of said first optical input signal and said second optical input signal;

a processing unit for isolating heterodyne signals from said electrical output signals, said heterodyne signals comprising a first signal and a second signal such that phase diversity of the heterodyne components between said first input signal and said second input signal is achieved by said phase-diverse coherent optical spectrum analyzer.

19. The phase-diverse coherent optical spectrum analyzer as recited in Claim 18 further comprising a transformation unit for transforming said electrical output signals into a first quadrature signal and a second quadrature signal such that phase diversity of the heterodyning of said first optical input signal and said second optical input signal is resolved into an orthogonal basis by said phase-diverse coherent optical spectrum analyzer.

20. The phase-diverse coherent optical spectrum analyzer as recited in Claim 18 wherein said optical coupler is a 3x3 optical coupler.

21. The phase-diverse coherent optical spectrum analyzer as recited in Claim 18 wherein said optical coupler is a 4x4 optical coupler.

22. The phase-diverse coherent optical spectrum analyzer as recited in Claim 18 further comprising a local oscillator for producing a local oscillator signal, wherein said local oscillator signal is said second input signal.

23. The phase-diverse coherent optical spectrum analyzer as recited in Claim 18 wherein said detector unit comprises at least three photodiodes corresponding to said optical output signals, said photodiodes for converting said optical output signals into said corresponding electrical output signals.

24. The phase-diverse coherent optical spectrum analyzer as recited in Claim 18 further comprising a complex filter for filtering said first signal and said second signal to isolate a frequency.

25. The phase-diverse coherent optical spectrum analyzer as recited in Claim 19 further comprising a complex filter for filtering said first quadrature signal and said second quadrature signal to isolate a frequency.

26. The phase-diverse coherent optical spectrum analyzer as recited in Claim 22 wherein said local oscillator signal is sweeping in frequency.

27. The phase-diverse coherent optical spectrum analyzer as recited in Claim 22 wherein said processing unit is operable to subtract out a noise portion of said heterodyne signals.

28. A method for analyzing an optical signal comprising:

receiving a first optical input signal;

receiving a second optical input signal;

producing a first output signal, a second output signal, and a third output signal based on mixing said first optical input signal and said second optical input signal;

isolating heterodyne components of said first output signal, said second output signal and said third output signal, said heterodyne components comprising a first quadrature signal and a second quadrature signal such that phase diversity of the heterodyne mixing between said first input signal and said second input signal is achieved by said phase-diverse coherent optical spectrum analyzer.

29. A method for analyzing an optical signal comprising:

receiving a first optical input signal;

receiving a second optical input signal;

producing a first output signal, a second output signal, and a third output signal based on mixing said first optical input signal and said second optical input signal;

isolating heterodyne components of said first output signal, said second output signal and said third output signal, said heterodyne components comprising a first quadrature signal and a second quadrature signal such that phase diversity of the heterodyne mixing between said first input signal and said second input signal is achieved by said phase-diverse coherent optical spectrum analyzer; and

complex filtering said first quadrature signal and said second quadrature signal to isolate a negative and/or positive frequency.

30. The method as recited in Claim 28 further comprising filtering said first quadrature signal and said second quadrature signal to isolate a frequency.

31. The method as recited in Claim 28 or 29, further comprising calculating amplitude and phase of said mixing of first optical input signal and second optical input signal based on said first quadrature signal and said second quadrature signal.

EP 1 669 729 A1

# Figure 1A

100

$e^{\pm i2\pi ft}$

| 102 Local Oscillator |
|---|

LO → A

| 104 Optical Signal Path |
|---|

106 Unknown Signal → B

| 105 Receiver Unit |
|---|

I →

Q →

| 140 Complex Signal Generation Unit |
|---|

S (Complex Signal) →

| 150 Complex Filter |
|---|

out

Figure 1B

# Figure 2

EP 1 669 729 A1

110

215a

210

220

LO — A

D — 225a

228a Amplifier — K → $(S1 + P_{unknown} + P_{LO})$

215b

Unknown Signal — B

E — 225b

228b Amplifier — L → $(S2 + P_{unknown} + P_{LO})$

C

F — 225c

228c Amplifier — M → $(S3 + P_{unknown} + P_{LO})$

215c

EP 1 669 729 A1

# Figure 3

# Figure 4A

400

**Relative Phase of
Heterodyne Terms**

# Figure 4B

450

**Relative Phase of
Quadrature Signals**

EP 1 669 729 A1

# Figure 5

500

```
┌─────────────────────────────────────────────────┐
│                      510                          │
│          Receive a first optical input signal     │
└─────────────────────────────────────────────────┘
                        │
                        ▼
┌─────────────────────────────────────────────────┐
│                      520                          │
│         Receive a second optical input signal     │
└─────────────────────────────────────────────────┘
                        │
                        ▼
┌─────────────────────────────────────────────────┐
│                      530                          │
│      Generate at least a first output signal, a second │
│      output signal, and a third output signal based on │
│      the first optical input signal and the second optical │
│                   input signal                    │
└─────────────────────────────────────────────────┘
                        │
                        ▼
┌─────────────────────────────────────────────────┐
│                      540                          │
│      Isolate heterodyne signal from the first output │
│      signal, the second output signal and the third │
│                  output signal                    │
└─────────────────────────────────────────────────┘
                        │
                        ▼
┌─────────────────────────────────────────────────┐
│                      550                          │
│   Transform the heterodyne signals into a first quadrature signal │
│   and a second quadrature signal such that phase diversity of the │
│   heterodyne beat signal between the first optical input signal and │
│   the second optical input signal is resolved into an orthogonal │
│   basis by the phase diverse coherent optical spectrum analyzer │
└─────────────────────────────────────────────────┘
                        │
                        ▼
┌─────────────────────────────────────────────────┐
│                      560                          │
│   Determine amplitude and phase of the heterodyne │
│     signal based on the first quadrature signal and │
│             the second quadrature signal           │
└─────────────────────────────────────────────────┘
                        │
                        ▼
┌─────────────────────────────────────────────────┐
│                      570                          │
│     Filter the first quadrature signal and second │
│    quadrature signal with complex filter to isolate │
│         negative and/or positive frequencies      │
└─────────────────────────────────────────────────┘
```

European Patent
Office

**EUROPEAN SEARCH REPORT**

Application Number

EP 04 02 9252

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | EP 1 519 171 A (AGILENT TECHNOLOGIES, INC) 30 March 2005 (2005-03-30)<br><br>* the whole document *<br>----- | 1,3-5, 7-14, 17-20, 22-31 | G01J9/04<br>G01R23/14 |
| X | GB 2 197 461 A (THE * PLESSEY COMPANY PLC; * THE PLESSEY COMPANY PLC) 18 May 1988 (1988-05-18)<br><br>* abstract *<br>* page 1, line 6 - page 3, line 49 *<br>* figures 1-3 * | 1,2,6,8, 10-14, 17-19, 21-23, 26-28,31 | |
| Y | | 3,4,7,9, 24,25, 29,30 | |
| X | US 2004/114939 A1 (TAYLOR MICHAEL GEORGE) 17 June 2004 (2004-06-17)<br>* abstract *<br>* paragraphs [0029] - [0060] *<br>* figure 3b *<br>----- | 1,18,28 | |
| X | US 5 365 185 A (BAR-DAVID ET AL) 15 November 1994 (1994-11-15)<br><br><br>* abstract *<br>* column 3, line 4 - line 43 *<br>* figures 1,2 *<br>-----<br>-/-- | 1,5,8, 10-13, 15,16, 18-20, 22,23, 27,28 | |

TECHNICAL FIELDS SEARCHED (Int.Cl.7)

G01J
G01R
H04B
H04L

The present search report has been drawn up for all claims

| Place of search | Date of completion of the search | Examiner |
|---|---|---|
| Munich | 4 May 2005 | Haller, M |

## EUROPEAN SEARCH REPORT

**European Patent Office**

Application Number

EP 04 02 9252

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 2003/146743 A1 (TRUESDALE DEREK) 7 August 2003 (2003-08-07) <br><br> * paragraphs [0018] - [0032] * <br> * figure 3 * | 3,4,7,9, 24,25, 29,30 | |
| A | ----- | 17,26 | |

TECHNICAL FIELDS SEARCHED (Int.Cl.7)

The present search report has been drawn up for all claims

| Place of search | Date of completion of the search | Examiner |
|---|---|---|
| Munich | 4 May 2005 | Haller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 02 9252

This annex lists the patent family members relating to the patent documents cited in  the above-mentioned European search report.
The members are as contained in the European Patent Office EDP file on
The European Patent Office is in no way liable for these particulars which are merely  given for the purpose of information.

04-05-2005

| Patent document cited in search report | | Publication date | Patent family member(s) | | Publication date |
|---|---|---|---|---|---|
| EP 1519171 | A | 30-03-2005 | US | 2005068533 A1 | 31-03-2005 |
| | | | EP | 1519171 A1 | 30-03-2005 |
| GB 2197461 | A | 18-05-1988 | AU | 592476 B2 | 11-01-1990 |
| | | | AU | 8014687 A | 28-04-1988 |
| US 2004114939 | A1 | 17-06-2004 | AU | 2003296411 A1 | 30-06-2004 |
| | | | WO | 2004054138 A2 | 24-06-2004 |
| US 5365185 | A | 15-11-1994 | IL | 102737 A | 27-11-1995 |
| | | | JP | 8116342 A | 07-05-1996 |
| | | | NL | 9301324 A | 01-03-1994 |
| US 2003146743 | A1 | 07-08-2003 | NONE | | |

EPO FORM P0459

For more details about this annex : see Official Journal of the European Patent Office, No. 12/82